# EUROPEAN PATENT APPLICATION

(11) **EP 4 675 833 A1**
(43) Date of publication of application: **07.01.2026**
(21) Application number: 23925449.3
(22) Date of filing: 28.12.2023
(51) Int. Cl.: H01M 50/526, H01M 50/505, H01M 50/522, H01M 50/524

(54) **BUS BAR AND METHOD FOR PRODUCING SAME, AND ELECTRIC POWER STORAGE DEVICE**

(30) Priority: 28.02.2023 JP 2023030457
(71) Applicant: IBIDEN CO., LTD., Ogaki-shi, Gifu 503-8604 (JP)
(72) Inventor: KAWASAKI, Hironori, Ibi-gun, Gifu 501-0695 (JP); GOTO, Shinnosuke, Ibi-gun, Gifu 501-0695 (JP)
(74) Representative: Hoffmann Eitle
(86) International application number: PCT/JP2023/047225
(87) International publication number: WO 2024/180899

(57) **Abstract**

To provide a bus bar that can be produced at a low cost and that can stably ensure an insulation property. A bus bar (1a) for use in a power storage device including a battery cell includes a bus bar body (25) containing a conductive material and having a plurality of main surfaces (a first main surface (25a) and a second main surface (25b)) orthogonal to a plate-thickness direction (27), and an insulating film (26) covering the bus bar body (25). A predetermined first main surface (25a) among the plurality of main surfaces of the bus bar body (25) has a first region (21) in which the insulating film (26) formed on the first main surface (25a) has a maximum film thickness T1max and a second region (22) in which the insulating film (26) formed on the first main surface (25a) has a minimum film thickness T1min. A ratio (T1max/T1min) of the maximum film thickness T1max to the minimum film thickness T1min is larger than 1.0 and 7.0 or less.

## Description

### TECHNICAL FIELD

The present invention relates to a bus bar, a method for producing the same, and a power storage device in which a plurality of battery cells or battery modules are connected to each other by the bus bar.

### BACKGROUND ART

Various electronic devices, electric vehicles or hybrid vehicles driven by an electric motor, storage batteries, and the like are mounted with a power storage device in which a plurality of battery cells are connected in series or in parallel by a bus bar. In addition, a lithium ion secondary battery, which has higher capacity and is capable of higher output than a lead-acid battery, a nickel-metal hydride battery, or the like, is mainly used for the battery cells.

Since the bus bar is required to have an insulation property, in Patent Literature 1, a coating film composed of a resin such as an epoxy, an epoxy polyester, or a polyester is formed on a bus bar body such as a metal plate.

However, in the battery cell, an overcurrent is applied during charging and discharging, and the bus bar may generate heat, and in some cases, a flame may be generated. In such an abnormal state, the bus bar described in Patent Literature 1 may not have sufficient heat resistance. In addition, in the case where an explosion occurs due to thermal runaway of the battery cell or the like, when a fragment or a liquid is scattered and collides with the coating film on a surface of the bus bar, the coating film is damaged, and the heat resistance and the insulation property extremely decrease.

On the other hand, when a thickness of the entire coating film is increased in order to sufficiently ensure the heat resistance and the insulation property, a material cost of the coating film increases.

Therefore, in Patent Literature 2, a bus bar body is covered with a mica sheet having an electrical insulation property and heat resistance.

### CITATION LIST

### PATENT LITERATURE

Patent Literature 1: JP2021-48001A
Patent Literature 2: JP2020-528650A

### SUMMARY OF INVENTION

### TECHNICAL PROBLEM

However, in Patent Literature 2, it is necessary to wind the mica sheet around the bus bar body. The bus bar may have a complicated shape due to a spatial limitation of an installation location of the battery cell, and when the bus bar has a complicated shape, it is difficult to wind the mica sheet around every corner of the bus bar body. When the mica sheet has winding unevenness or a gap, no sufficient electrical insulation property can be obtained. Further, an adhesive surface of the mica sheet may be peeled off at a high temperature.

Therefore, an object of the present invention is to provide a bus bar that is low in cost and that can stably ensure an insulation property at a necessary location. Another object of the present invention is to provide a method for producing a bus bar that does not require a winding operation such as that for a mica sheet, that does not cause winding unevenness or a gap between sheets, that does not have a problem of sheet peeling off, that can even easily cope with a complicated shape, and that can easily produce a bus bar at a low cost. Still another object of the present invention is to provide a power storage device in which a plurality of battery cells or battery modules are connected to each other by such a bus bar to exhibit high safety even in an abnormal state.

### SOLUTION TO PROBLEM

The above object of the present invention is achieved by the following configuration [1] relating to a bus bar.
[1] A bus bar for use in a power storage device including a battery cell, the bus bar including:
   a bus bar body containing a conductive material and having a plurality of main surfaces orthogonal to a plate-thickness direction; and
   an insulating film covering the bus bar body, in which
   a predetermined first main surface among the plurality of main surfaces of the bus bar body has a first region in which the insulating film formed on the first main surface has a maximum film thickness T1max and a second region in which the insulating film formed on the first main surface has a minimum film thickness T1min, and
   a ratio (T1max/T1min) of the maximum film thickness T1max to the minimum film thickness T1min is larger than 1.0 and 7.0 or less.
      In addition, preferred embodiments of the present invention relating to the bus bar relate to the following [2] to [14].
[2] The bus bar according to [1], in which the minimum film thickness T1min is 300 µm or more.
[3] The bus bar according to [1] or [2], in which the maximum film thickness T1max is larger than 300 µm and 2,100 µm or less.
[4] The bus bar according to any one of [1] to [3], in which
   a second main surface on a back surface side of the first main surface has a third region in which the insulating film formed on the second main surface has a maximum film thickness T2max and a fourth region in which the insulating film formed on the second main surface has a minimum film thickness T2min, and
   a ratio (T2max/T2min) of the maximum film thickness T2max to the minimum film thickness T2min is larger than 1.0 and 7.0 or less.
[5] The bus bar according to any one of [1] to [3], in which
   a second main surface on a back surface side of the first main surface has a third region in which the insulating film formed on the second main surface has a maximum film thickness T2max, and
   a ratio (T1max/T2max) of the maximum film thickness T1max to the maximum film thickness T2max is larger than 1.0 and 7.0 or less.
[6] The bus bar according to any one of [1] to [5], in which the insulating film contains a filler.
[7] The bus bar according to [6], in which the filler includes an inorganic compound.
[8] The bus bar according to [7], in which the inorganic compound includes a silicate compound.
[9] The bus bar according to [8], in which the silicate compound is at least one kind selected from a glass-based material, mica, kaolin, talc, clay, pyrophyllite, montmorillonite, bentonite, wollastonite, xonotlite, zeolite, diatomaceous earth, and halloysite.
[10] The bus bar according to [9], in which the glass-based material is at least one kind selected from a flaky glass, a glass particle, a glass fiber, and a glass bead.
[11] The bus bar according to [9], in which the silicate compound includes at least one of a glass-based material and mica, and the glass-based material is a flaky glass.
[12] The bus bar according to any one of [6] to [11], in which a content of the filler with respect to all components in the insulating film is 3 vol% to 70 vol%.
[13] The bus bar according to any one of [1] to [12], in which the insulating film contains a silicone-based material.
[14] The bus bar according to [13], in which the insulating film contains a silicone resin and a thixotropic agent.
   In addition, the above object of the present invention is achieved by the following configurations [15] to [17] relating to a method for producing a bus bar.
[15] A method for producing the bus bar according to any one of [1] to [4] and [6] to [14], the method including:
   a dipping step of immersing the bus bar body in an insulating coating material and then pulling up the bus bar body; and
   a drying step of drying the insulating coating material applied to a surface of the bus bar body to form the insulating film, in which
   the dipping step includes a step of immersing the bus bar body in the insulating coating material and then pulling up the bus bar body from the insulating coating material in a state where the bus bar body is held such that a position of the first region is disposed below a position of the second region in a substantially vertical direction.
[16] A method for producing the bus bar according to [4], the method including:
   a first dipping step of immersing the bus bar body in an insulating coating material and then pulling up the bus bar body;
   a first drying step of drying the insulating coating material applied to a surface of the bus bar body to form the insulating film;
   a second dipping step of immersing the bus bar body on which the insulating film is formed after the first drying step in an insulating coating material again and then pulling up the bus bar body; and
   a second drying step of drying the insulating coating material applied to the surface of the bus bar body after the second dipping step to form the insulating film, in which
   the first dipping step includes a step of immersing the bus bar body in the insulating coating material and then pulling up the bus bar body from the insulating coating material in a state where the bus bar body is held such that the first main surface faces downward in a substantially vertical direction, and
   the second dipping step includes a step of immersing the bus bar body on which the insulating film is formed after the first drying step in the insulating coating material again, and then pulling up the bus bar body from the insulating coating material in a state where the bus bar body is held such that the second main surface faces downward in the substantially vertical direction.
[17] A method for producing the bus bar according to [5], the method including:
   a dipping step of immersing the bus bar body in an insulating coating material and then pulling up the bus bar body; and
   a drying step of drying the insulating coating material applied to a surface of the bus bar body to form the insulating film, in which
   the dipping step includes a step of immersing the bus bar body in the insulating coating material and then pulling up the bus bar body from the insulating coating material in a state where the bus bar body is held such that the first main surface faces downward in a substantially vertical direction.
      In addition, the above object of the present invention is achieved by the following configuration [18] relating to a power storage device.
[18] A power storage device including:
   a plurality of battery cells or battery modules connected to each other by the bus bar according to any one of [1] to [14].
   In addition, preferred embodiments of the present invention relating to the power storage device relate to the following [19] and [20].
[19] The power storage device according to [18], in which the bus bar is disposed such that the first region in the first main surface faces the battery cells or the battery modules.
[20] A power storage device including:
   a plurality of battery cells or battery modules connected to each other by the bus bar according to [4], in which
   the bus bar is disposed such that the first region in the first main surface and the third region in the second main surface face the plurality of battery cells or battery modules.

### ADVANTAGEOUS EFFECTS OF INVENTION

In the bus bar according to the present invention, since the first region having a large film thickness and the second region having a small film thickness are present in the insulating film in the predetermined first main surface, by designing the first region to be disposed at a location where particularly peeling off prevention and a high insulation property of the insulating film are required, it is possible to realize the peeling off prevention and a high insulation property of the insulating film at the necessary location. In addition, since it is not necessary to increase the film thickness in a location where the peeling off prevention and a high insulation property of the insulating film are not required, a material cost of the insulating film can be reduced.

In addition, in the method for producing a bus bar according to the present invention, "dip coating" in which the bus bar body is immersed in the insulating coating material, then the bus bar body is pulled up in a state where the first region faces substantially vertically downward, and the coating material is dried can be used. Therefore, the production step is simple, and an amount of the insulating coating material used can be reduced. In addition, regardless of a shape of the bus bar body, it is possible to form an insulating film that realizes peeling off prevention and a high insulation property of the insulating film at a necessary location.

Further, in the power storage device according to the present invention, since the plurality of battery cells or battery modules are connected to each other by such a bus bar, an insulation failure is less likely to occur, and the occurrence of peeling off of the insulating film can be suppressed and high safety can be obtained even in an abnormal state.

### BRIEF DESCRIPTION OF DRAWINGS

[Fig. 1] Fig. 1 is an exploded perspective view showing a state where an example of a bus bar according to the present invention is mounted to a battery cell.
[Fig. 2A] Fig. 2A is a schematic diagram showing an example of a bus bar according to an embodiment of the present invention.
[Fig. 2B] Fig. 2B is a schematic diagram showing another example of the bus bar according to the embodiment of the present invention.
[Fig. 2C] Fig. 2C is a schematic diagram showing still another example of the bus bar according to the embodiment of the present invention.
[Fig. 3] Fig. 3 is a perspective view illustrating a method of measuring a minimum film thickness and a maximum film thickness of an insulating film.
[Fig. 4] Fig. 4 is a cross-sectional view showing an example of a power storage device according to the present invention.

### DESCRIPTION OF EMBODIMENTS

Hereinafter, embodiments of the present invention will be described in detail with reference to the drawings. Note that, the present invention is not limited to the embodiments described below, and can be freely changed and implemented without departing from the gist of the present invention.

### [Bus Bar]

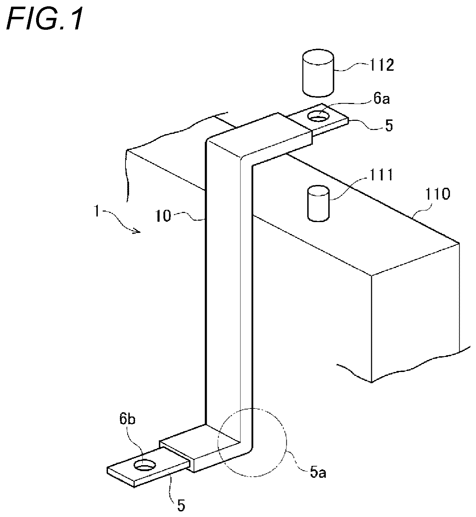

Fig. 1 is an exploded perspective view showing a state where a bus bar 1 according to the present embodiment is mounted to a battery cell 110. As shown in Fig. 1, a bus bar body 5 composed of a conductive material is, for example, a metal plate member having a Z-shape as a whole, and is to be fixed by inserting an electrode 111 of the battery cell 110 into a connection hole 6a at one tip and covering the electrode 111 with a terminal cap 112. A connection hole 6b at the other tip of the bus bar body 5 is connected to adjacent battery cells (not shown) or external devices (not shown). A portion excluding the connection holes 6a and 6b (surface) of the bus bar body 5 is covered with an insulating film 10, which is to be described later, thereby forming the bus bar 1.

Note that, although not shown, the bus bar body 5 may have various shapes depending on an installation location of the battery cell 110, such as an I-shape as a whole or an irregular shape having a curved portion.

When the bus bar body 5 has a shape having a bent portion 5a such as a Z-shape shown in Fig. 1 or a curved portion (not shown), in a method of winding a mica sheet as in the bus bar in Patent Literature 2, it is assumed that a winding operation takes time and effort to prevent the winding unevenness or the gap from occurring in the bent portion 5a or the curved portion, the gap is generated due to a vibration or the like, or an adhesive is peeled off. However, as to be described later, in the present embodiment, such a problem does not occur since the insulating film 10 is formed by "dip coating" in which the bus bar body 5 is immersed in an insulating coating material, pulled up, and then dried. In addition, the "dip coating" also has an advantage that the step is simple. Note that, in the present description, an insulating coating obtained by the "dip coating" can also be referred to as an "insulating coating film".

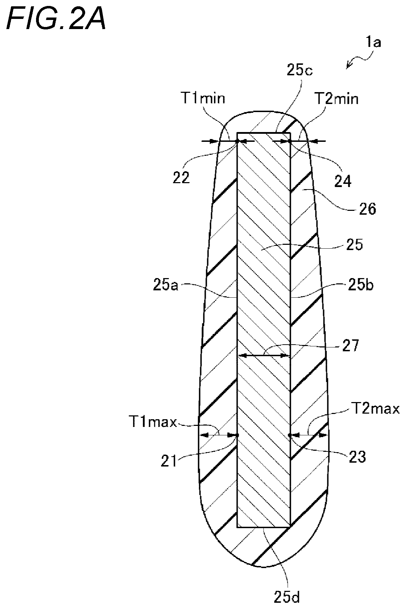

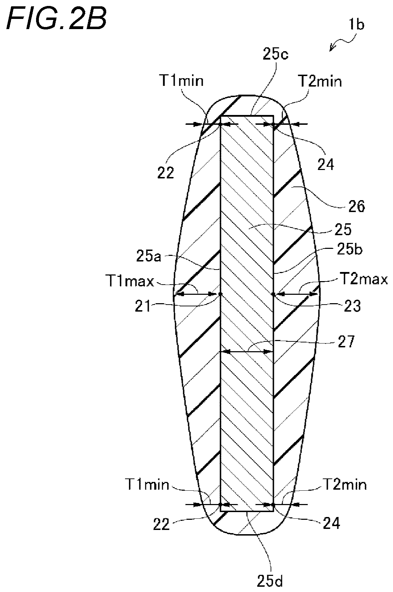

Fig. 2A to Fig. 2C are each a schematic diagram showing an example of a bus bar according to an embodiment of the present invention. Note that, in order to simplify the description, the shape of the bus bar shown in Fig. 2A to Fig. 2C is different from that of the bus bar shown in Fig. 1, and a rectangular flat plate shape is taken as an example, and the connection holes 6a and 6b are omitted. In addition, in Fig. 2A to Fig. 2C, the same reference numerals are given to the same components, and detailed description in and after Fig. 2B will be omitted.

As shown in Fig. 2A, a bus bar 1a includes a bus bar body 25 and an insulating film 26 covering the bus bar body 25. The bus bar body 25 has a first main surface 25a and a second main surface 25b orthogonal to a plate-thickness direction 27, and the first main surface 25a has a first region 21 in which the insulating film 26 formed on the first main surface 25a has a maximum film thickness T1max and a second region 22 in which the insulating film 26 formed on the first main surface 25a has a minimum film thickness T1min. A film thickness of the insulating film 26 gradually increases from the second region 22 toward the first region 21 and gradually increases from a fourth region 24 toward a third region 23. Note that, in the bus bar 1a, the insulating film 26 is formed with a substantially symmetrical thickness on the first main surface 25a and the second main surface 25b, and forms a bell shape in a cross-sectional view. In addition, of a pair of end surface 25c and end surface 25d parallel to the plate-thickness direction 27 of the bus bar body 25, the first region 21 is formed at a position close to the end surface 25d, and the second region 22 is formed at a position close to the end surface 25c.

In addition, in a bus bar 1b shown in Fig. 2B, the first region 21 in which the insulating film 26 has the maximum film thickness T1max is formed near a center of the first main surface 25a of the bus bar body 25. In addition, the second region 22 in which the insulating film 26 has the minimum film thickness T1min is formed near each of the pair of end surfaces 25c and 25d on the first main surface 25a. Similarly, the third region 23 in which the insulating film 26 has a maximum film thickness T2max is formed near a center of the second main surface 25b of the bus bar body 25, and the fourth region 24 in which the insulating film 26 has a minimum film thickness T2min is formed near each of the pair of end surfaces 25c and 25d on the second main surface 25b.

Note that, the minimum film thicknesses T1min in the two second regions 22 are approximately the same value, and the minimum film thicknesses T2min in the two fourth regions 24 are approximately the same value. Similar to the bus bar 1a, the film thickness of the insulating film 26 on the first main surface 25a gradually increases from one second region 22 toward the first region 21 and then gradually decreases from the first region 21 toward the other second region 22. The film thickness of the insulating film 26 on the second main surface 25b also gradually increases from one fourth region 24 toward the third region 23 and then gradually decreases from the third region toward the other fourth region 24. In the bus bar 1b, the insulating film 26 is also formed with a substantially symmetrical thickness on the first main surface 25a and the second main surface 25b.

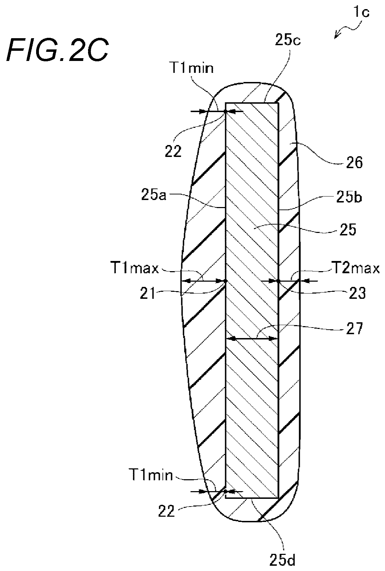

Further, in a bus bar 1c shown in Fig. 2C, the first region 21 in which the insulating film 26 has the maximum film thickness T1max is formed near the center of the first main surface 25a of the bus bar body 25. In addition, the second region 22 in which the insulating film 26 has the minimum film thickness T1min is formed near each of the pair of end surfaces 25c and 25d on the first main surface 25a. Note that, the minimum film thicknesses T1min in the two second regions 22 are approximately the same value. Similar to the bus bar 1b, the film thickness of the insulating film 26 on the first main surface 25a gradually increases from one second region 22 toward the first region 21 and gradually decreases from the first region 21 toward the other second region 22. However, in the bus bar 1c, the film thickness of the insulating film on the first main surface 25a and the film thickness of the insulating film on the second main surface 25b are not symmetrical, and the insulating film formed on the second main surface 25b has a substantially constant thickness. Note that, the maximum film thickness T1max of the insulating film on the first main surface 25a is larger than the maximum film thickness T2max of the insulating film on the second main surface 25b.

In the bus bars 1a to 1c according to the present embodiment configured in this manner, since the first region 21 having a large film thickness and the second region 22 having a small film thickness are present in the insulating film in the predetermined first main surface 25a, by designing the first region 21 to be disposed at a location where particularly peeling off prevention and a high insulation property of the insulating film 26 are required, it is possible to realize the peeling off prevention and a high insulation property of the insulating film 26 at the necessary location. In addition, since it is not necessary to increase the film thickness in a location where the peeling off prevention and a high insulation property of the insulating film 26 are not required, a material cost of the insulating film can be reduced.

In addition, in the bus bars 1a and 1b, the third region 23 having a large film thickness and the fourth region 24 having a small film thickness are also present on the second main surface 25b. Therefore, in the case where a battery cell or the like is disposed at any position on a first main surface 25a side and a second main surface 25b side, when the first region 21 and the third region 23 are disposed to face the battery cell, in the case where an explosion occurs due to thermal runaway or the like of one battery cell, damage to the insulating film is suppressed, and thus the insulation property can be maintained.

Further, in the bus bar 1c, the first region 21 having a large film thickness and the second region 22 having a small film thickness are present only on the first main surface 25a, and the insulating film 26 formed on the second main surface 25b is substantially flat. Therefore, in the case where a battery cell or the like is disposed only on one surface (the first main surface 25a) side of the bus bar 1c and a battery cell or the like is not disposed on the other surface (the second main surface 25b) side, damage to the insulating film on the surface on which the battery cell or the like is disposed can be suppressed and the insulation property can be maintained in a state where an amount of the insulating film is minimized.

A relationship between the minimum film thicknesses T1min and T2min and the maximum film thicknesses T1max and T2max of the insulating film 26 on the first main surface 25a and the second main surface 25b will be described below using the bus bar 1b as an example.

### (T1max/T1min: larger than 1.0 and 7.0 or less, T2max/T2min: larger than 1.0 and 7.0 or less)

When (T1max/T1min) is 1.0, a difference between the maximum film thickness T1max and the minimum film thickness T1min is reduced, and in the case where an insulating film having an effect of preventing peeling off at a desired position and having a film thickness for obtaining a high insulation property is formed, the minimum film thickness T1min also has a large value. Therefore, it is not possible to sufficiently reduce the film thickness at a location where the peeling off prevention and the insulation property are not required, and it is difficult to reduce the material cost. Therefore, (T1max/T1min) is set to be larger than 1.0, preferably 1.7 or more, and more preferably 2.3 or more.

On the other hand, when (T1max/T1min) is larger than 7.0, the difference between the maximum film thickness T1max and the minimum film thickness T1min is increased, and in the case where an insulating film having an effect of preventing peeling off at a desired position and having an appropriate film thickness for obtaining a high insulation property is formed, the minimum film thickness T1min is too small, and a strength of the insulating film in the second region 22 and a peripheral portion thereof decreases. Therefore, (T1max/T1min) is set to be 7.0 or less, preferably 6.0 or less, and more preferably 5.0 or less.

Note that, in the case of also forming the insulating film 26 having the maximum film thickness T2max and the minimum film thickness T2min on the second main surface 25b on the back surface side of the first main surface 25a, for the same reason as described above, (T2max/T2min) is set to be larger than 1.0, preferably 1.7 or more, and more preferably 2.3 or more. In addition, (T2max/T2min) is set to be 7.0 or less, preferably 6.0 or less, and more preferably 5.0 or less.

### (T1min: 300 µm or more, T2min: 300 µm or more)

When the minimum film thickness T1min of the insulating film 26 on the first main surface 25a and the minimum film thickness T2min of the insulating film 26 on the second main surface 25b are each less than 300 µm, there is a concern that no sufficient strength and properties of the insulating film can be obtained. Therefore, each of T1min and T2min is preferably 300 µm or more, more preferably 400 µm or more, and still more preferably 500 µm or more.

On the other hand, in the present embodiment, since the values of (T1max/T1min) and (T2max/T2min) are defined, the maximum film thickness T1max and the maximum film thickness T2max are also increased by increasing the minimum film thickness T1min and the minimum film thickness T2min, and the thickness of the insulating film is excessively increased as a whole. As a result, the material cost for forming the insulating film increases, and it is difficult to design a space for disposing the bus bar. Further, in a region of the maximum film thickness T1max and the maximum film thickness T2max, a defect in film quality such as a crack in the insulating film 26 is observed. Therefore, each of T1min and T2min is preferably less than 2,100 µm, more preferably 1,800 µm or less, and still more preferably 1,500 µm or less.

### (T1max: larger than 300 µm and 2,100 µm or less, T2max: larger than 300 µm and 2,100 µm or less)

When the maximum film thickness T1max of the insulating film 26 on the first main surface 25a and the maximum film thickness T2max of the insulating film 26 on the second main surface 25b are each 300 µm or less, there is a concern that no sufficient strength and properties of the insulating film can be obtained in a desired region. Therefore, each of T1max and T2max is preferably larger than 300 µm, more preferably 400 µm or more, and still more preferably 500 µm or more.

On the other hand, even when each of the maximum film thickness T1max and the maximum film thickness T2max is increased to be larger than 2,100 µm, no further improvement of the insulation property and the like can be expected. In addition, in the present embodiment, since the values of (T1max/T1min) and (T2max/T2min) are defined, the minimum film thickness T1min and the minimum film thickness T2min are also increased by increasing the maximum film thickness T1max and the maximum film thickness T2max, and the thickness of the insulating film is excessively increased as a whole. As a result, the material cost for forming the insulating film increases, and it is difficult to design a space for disposing the bus bar. Further, in a region of the maximum film thickness T1max and the maximum film thickness T2max, a defect in film quality such as a crack in the insulating film 26 is observed. Therefore, each of T1max and T2max is preferably 2,100 µm or less, more preferably 1,800 µm or less, and still more preferably 1,500 µm or less.

Further, as in the bus bar 1c shown in Fig. 2C, in the case where the insulating film 26 having the maximum film thickness T1max and the minimum film thickness T1min at a predetermined ratio is formed on the first main surface 25a of the bus bar 1c and a substantially flat insulating film 26 is formed on the second main surface 25b, the relationship between the maximum film thickness T1max on the first main surface 25a and the maximum film thickness T2max on the second main surface 25b will be described below. Note that, as shown in Fig. 2C, the maximum film thickness T1max is larger than the maximum film thickness T2max.

### (T1max/T2max: larger than 1.0 and 7.0 or less)

When (T1max/T2max) is 1.0, a difference between the maximum film thickness T1max and the maximum film thickness T2max is reduced, so that in the case where an insulating film having an effect of preventing peeling off at a desired position on the first main surface 25a and having a film thickness for obtaining a high insulation property is formed, the maximum film thickness T2max on the second main surface 25b also has a large value. Therefore, it is not possible to sufficiently reduce the film thickness at a location where the peeling off prevention and the insulation property are not required, and it is difficult to reduce the material cost. Therefore, (T1max/T2max) is set to be larger than 1.0, preferably 1.7 or more, and more preferably 2.3 or more.

On the other hand, when (T1max/T2max) is larger than 7.0, the difference between the maximum film thickness T1max and the maximum film thickness T2max is increased, and in the case where an insulating film having an effect of preventing peeling off at a desired position on the first main surface 25a and having an appropriate film thickness for obtaining a high insulation property is formed, the maximum film thickness T2max is too small, and the strength of the insulating film 26 formed on the second main surface 25b decreases. Therefore, (T1max/T2max) is preferably 7.0 or less, more preferably 6.0 or less, and still more preferably 5.0 or less.

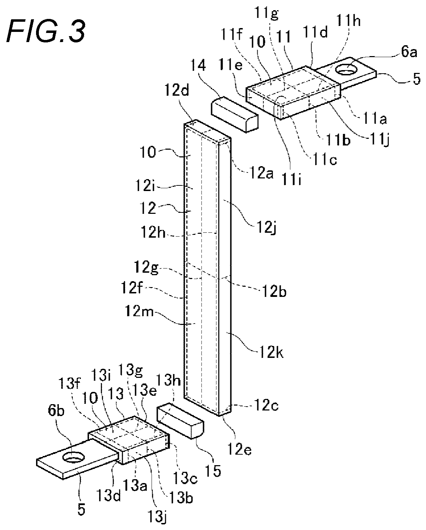

Here, a method of measuring a minimum film thickness and a maximum film thickness on a first main surface of the insulating film 10 will be specifically described with reference to Fig. 3 by taking the bus bar 1 shown in Fig. 1 as an example. Note that, Fig. 3 is a diagram in which all bent portions of the bus bar 1 shown in Fig. 1 are cut along two surfaces constituting an inner angle side and the bus bar 1 is divided into plate-shaped bodies 11, 12, and 13 and bent bodies 14 and 15. Since it is difficult to measure a film thickness of the insulating film 10 in the entire region formed on a surface of the bus bar body 5, in the present embodiment, the film thickness of the main surface orthogonal to the plate-thickness direction of the bus bar body 5 is measured by the following measurement method. Note that, the bent bodies 14 and 15 cut off when the bus bar 1 is cut along the two surfaces constituting the inner angle side are ignored in this measurement method.

The bus bar 1 has a plurality of main surfaces (main surfaces 11i, 11j, 12i, 12j, 13i, and 13j) orthogonal to the plate-thickness direction. Among these main surfaces, in the case of measuring the maximum film thickness T1max and the minimum film thickness T1min for a predetermined first main surface, for example, the main surface 12i, cutting is performed at three locations of film thickness measurement lines 12a, 12b, and 12c along a direction orthogonal to a longitudinal direction of the plate-shaped body 12, and cutting is performed at three locations of film thickness measurement lines 12f, 12g, and 12h along a direction parallel to the longitudinal direction of the plate-shaped body 12. The positions of the film thickness measurement line 12a and the film thickness measurement line 12c are set to positions 1 mm inward from end surfaces 12d and 12e in the longitudinal direction of the plate-shaped body 12, respectively. In addition, the positions of the film thickness measurement line 12f and the film thickness measurement line 12h are set to positions 1 mm inward from end surfaces 12k and 12m in a short direction of the plate-shaped body 12, respectively. Further, the position of the film thickness measurement line 12b is set to a central position between the film thickness measurement line 12a and the film thickness measurement line 12c, and the position of the film thickness measurement line 12g is set to a central position between the film thickness measurement line 12f and the film thickness measurement line 12h.

The plate-shaped body 11 is cut along film thickness measurement lines 11a, 11b, and 11c and film thickness measurement lines 11f, 11g, and 11h in a direction same as the cutting direction of the plate-shaped body 12. Note that, the connection hole 6a is provided at one end portion of the plate-shaped body 11, and there is a possibility that the film thickness of the insulating film 10 is not stable near an end surface 11d on a connection hole 6a side. Therefore, the position of the film thickness measurement line 11a is set to a position 5 mm inward from the end surface 11d in the insulating film 10. In addition, the position of the film thickness measurement line 11c is set to a position 1 mm inward from the other end surface 11e of the plate-shaped body 11, and the position of the film thickness measurement line 11b is set to a central position between the film thickness measurement line 11a and the film thickness measurement line 11c. The positions of the film thickness measurement lines 11f and 11h are set to positions 1 mm inward from end surfaces, and the position of the film thickness measurement line 11g is set to a central position between the film thickness measurement line 11f and the film thickness measurement line 11h.

Similar to the plate-shaped body 11, since the connection hole 6b is provided at one end portion of the plate-shaped body 13, the position of a film thickness measurement line 13a is set to a position 5 mm inward from an end surface 13d in the insulating film 10. In addition, the position of a film thickness measurement line 13c is set to a position 1 mm inward from the other end surface 13e of the plate-shaped body 13, and the position of a film thickness measurement line 13b is set to a central position between the film thickness measurement line 13a and the film thickness measurement line 13c. The positions of film thickness measurement lines 13f and 13h are set to positions 1 mm inward from end surfaces, and the position of a film thickness measurement line 13g is set to a central position between the film thickness measurement line 13f and the film thickness measurement line 13h.

As described above, the three plate-shaped bodies 11, 12, and 13 are cut along the film thickness measurement lines 11a to 11c and 11f to 11h, 12a to 12c and 12f to 12h, and 13a to 13c and 13f to 13h, respectively, and photographs of all cut surfaces are taken. Then, image processing is performed on each photograph, and a distance from the surface of the bus bar body 5 to a surface of the insulating film 10 is measured for the main surface 12i, for example, and the smallest film thickness is defined as the minimum film thickness T1min, and the largest film thickness is defined as the maximum film thickness T1max. Note that, a region where the distance (film thickness) is measured is a rectangular region surrounded by the film thickness measurement lines 11a, 11c, 11f, and 11h in the plate-shaped body 11, for example. It is a rectangular region surrounded by the film thickness measurement lines 12a, 12c, 12f, and 12h in the plate-shaped body 12. Similarly, it is a rectangular region surrounded by the film thickness measurement lines 13a, 13c, 13f, and 13h in the plate-shaped body 13.

Note that, although not shown, in the case where the bus bar has a shape having a curved portion, it is preferable that a curved body cut off when the bus bar is cut into plate-shaped bodies is also cut at a position 1 mm inward from end surfaces and at a central position thereof in the same manner as the above method, and the film thickness is measured.

The insulating film 10 preferably has an insulation property, more preferably has heat resistance or fire resistance that can withstand heat generation or a flame from the battery cell 110 in an abnormal state, and specifically preferably has a composition shown below.

Note that, the insulating film 10 preferably contains a filler since the heat resistance can be improved. Since an inorganic compound has a high melting point and more excellent heat resistance, the insulating film 10 more preferably contains an inorganic compound as the filler, and among these, more preferably contains a silicate compound. In this manner, by selecting a material of the insulating film 10 and imparting the heat resistance or the fire resistance to the insulating film 10, it is possible to protect the bus bar from a high temperature or a flame from a battery cell that has experienced thermal runaway, and to prevent a chain reaction of the thermal runaway to adjacent battery cells via the bus bar 1.

The silicate compound is preferably at least one kind selected from a glass-based material, mica, kaolin, talc, clay, pyrophyllite, montmorillonite, bentonite, wollastonite, xonotlite, zeolite, diatomaceous earth, and halloysite.

In addition, the glass-based material is preferably at least one kind selected from a flaky glass, a glass particle, a glass fiber, and a glass bead.

Among these fillers, mica or a flaky glass is oriented in a plane in the film and exhibits an excellent insulation property and heat resistance. Therefore, in the case where the filler according to the present embodiment contains a silicate compound, it is particularly preferable that the silicate compound includes at least one of a glass-based material and mica, and the glass-based material includes a flaky glass.

A content of the filler with respect to all components in the insulating film 10 is preferably 3 vol% to 70 vol%. When the content of the filler is less than 3 vol%, there is a concern that no sufficient insulation property and heat resistance can be obtained. As to be described later, the insulating film 10 is formed by "dip coating", but when the content of the filler is more than 70 vol%, a viscosity of the insulating coating material to be dipped is too high, and film formability is deteriorated.

In addition, the insulating film 10 preferably contains a silicone-based material as a binder because of its excellent incombustibility and heat resistance. Examples of the silicone-based material include a silicone resin, and the film thickness of the insulating film 10 can be easily controlled by using a thixotropic agent in combination as a thickener.

Note that, in addition to the filler and the silicone-based material described above, the insulating film 10 may contain other materials such as a flame retardant, a dispersant, and a pigment as long as the insulation property and the heat resistance are not influenced.

Next, a method for producing the bus bar according to the present embodiment will be described. Note that, in order to show a relationship between the production method and the shape of the insulating film, here, methods for producing the bus bars 1a to 1c will be described as a first embodiment to a third embodiment with reference to Fig. 2A to Fig. 2C, respectively.

### [Method for Producing Bus Bar]

### <First Embodiment>

### (Dipping Step)

A dipping step is a step of immersing the bus bar body 25 in an insulating coating material and then pulling up the bus bar body 25, and is also referred to as "dip coating". Specifically, first, a predetermined amount of a filler is added to a silicone resin and sufficiently mixed to prepare an insulating coating material. Next, a periphery of a region (for example, a connection hole) of the bus bar body 25 where an insulating film is not required is masked, and the bus bar body 25 is immersed in the insulating coating material. Thereafter, the bus bar body 25 is pulled up from the insulating coating material in a state where the bus bar body 25 is held such that a position of the first region 21 whose film thickness is desired to be the maximum film thickness T1max is disposed below a position of the second region 22 whose film thickness is desired to be the minimum film thickness T1min in a substantially vertical direction. Note that, the first region 21 whose film thickness is desired to be the maximum film thickness T1max is a region in which the largest film thickness is required in the insulating film 26 formed on the first main surface 25a, and can be designed such that the first region 21 is disposed near a safety valve of the battery cell, for example.

As for an amount of the insulating coating material to be applied, it is preferable to appropriately adjust a pulling up speed, a drying temperature, and the like such that the minimum film thickness T1min or T2min of the insulating film after drying is preferably 300 µm or more, and more preferably 400 µm or more.

In addition, a content of the filler with respect to all solid components in the insulating coating material is preferably 3 vol% to 70 vol%, more preferably 10 vol% to 60 vol%, and still more preferably 20 vol% to 50 vol%. As described above, when the content of the filler is less than 3 vol%, there is a concern that no sufficient insulation property and heat resistance can be obtained. On the other hand, when the content of the filler is more than 70 vol%, the viscosity of the heat-resistant insulating coating material is too high, and there is a possibility that the film formability decreases.

### (Drying Step)

Thereafter, the insulating coating material applied on the surface of the bus bar body 25 is dried to form the insulating film 26. Accordingly, as in the bus bar 1a shown in Fig. 2A, the insulating film 26 having the maximum film thicknesses T1max and T2max can be formed near the one end surface 25d on the first main surface 25a and the second main surface 25b.

The amount of the insulating coating material applied is designed such that the ratio of the maximum film thickness T1max to the minimum film thickness T1min of the insulating film 26 on the first main surface 25a after drying is larger than 1.0 and 7.0 or less. For the maximum film thickness T1max and the minimum film thickness T1min, it is preferable to appropriately adjust the pulling up speed, the drying temperature, and the like such that each thickness is in the preferred numerical range described above.

### <Second Embodiment>

### (First Dipping Step)

First, similar to the first embodiment, the bus bar body 25 is immersed in an insulating coating material. Next, the bus bar body 25 is pulled up from the insulating coating material in a state where the bus bar body 25 is held such that the first main surface 25a faces downward in the substantially vertical direction.

### (First Drying Step)

Thereafter, the insulating coating material applied on the surface of the bus bar body 25 is dried.

### (Second Dipping Step)

Thereafter, the bus bar body 25 on which the insulating film is formed after the first drying step is immersed in an insulating coating material again, and then the bus bar body 25 is pulled up from the insulating coating material in a state where the bus bar body 25 is held such that the second main surface 25b faces downward in the substantially vertical direction. The amount of the insulating coating material applied is the same as that in the first embodiment.

### (Second Drying Step)

Thereafter, the insulating coating material applied to the surface of the bus bar body 25 after the second dipping step is dried again. Accordingly, as in the bus bar 1b shown in Fig. 2B, the insulating film 26 having the maximum film thicknesses T1max and T2max can be formed near centers of the first main surface 25a and the second main surface 25b.

With the production method according to the second embodiment, the insulating film 26 having the first region 21 having the maximum film thickness T1max and the second region 22 having the minimum film thickness T1min can be easily formed on the first main surface 25a. In addition, the insulating film 26 having the third region 23 having the maximum film thickness T2max and the fourth region 24 having the minimum film thickness T2min can be easily formed on the second main surface 25b. Therefore, a production cost can be reduced, and the bus bar in which the high strength insulating film 26 is formed in a desired region can be produced.

### <Third Embodiment>

### (Dipping Step)

The bus bar 1c shown in Fig. 2C can be produced by the first dipping step and the first drying step in the second embodiment. Specifically, similar to the first embodiment, the bus bar body 25 is immersed in an insulating coating material, and then the bus bar body 25 is pulled up from the insulating coating material in a state where the bus bar body 25 is held such that the first main surface 25a faces downward in the substantially vertical direction. The amount of the insulating coating material applied is the same as that in the first embodiment.

### (Drying Step)

Thereafter, the insulating coating material applied on the surface of the bus bar body 25 is dried. Accordingly, as in the bus bar 1c, the insulating film 26 having the maximum film thickness T1max can be formed near the center of the first main surface 25a, and the insulating film 26 having a substantially flat film thickness can be formed on the second main surface 25b.

With the production method according to the third embodiment, the insulating film 26 having the first region 21 having the maximum film thickness T1max and the second region 22 having the minimum film thickness T1min can be easily formed on the first main surface 25a. In addition, the flat insulating film 26 can be easily formed on the second main surface 25b that does not particularly require a film thickness. Therefore, a production cost can be reduced, and the bus bar in which the high strength insulating film 26 is formed in a desired region can be produced.

Note that, the present invention is not limited to the above production methods, and the direction in which the bus bar body is pulled up from the insulating coating material can be designed in various ways according to the region where a insulating film having a large film thickness is required.

In addition, in the method of winding the mica sheet as in Patent Literature 2, a winding operation is required, and in particular, the winding operation takes time and effort to prevent the winding unevenness or the gap from occurring in the bent portion 5a or the curved portion. In addition, it is assumed that the gap is generated due to a vibration or the like, or the adhesive is peeled off. However, according to the above production method, since the insulating film 26 is formed by the "dip coating", the insulating film 26 can be very easily formed, and since there is no wound portion like a mica sheet, the insulation property can be maintained. In addition, since the insulating film 26 can be easily formed with a large film thickness only in the desired first region and third region, it is possible to produce, at a low cost, a bus bar capable of preventing peeling off of the insulating film 26 during heat generation or explosion of the battery cell.

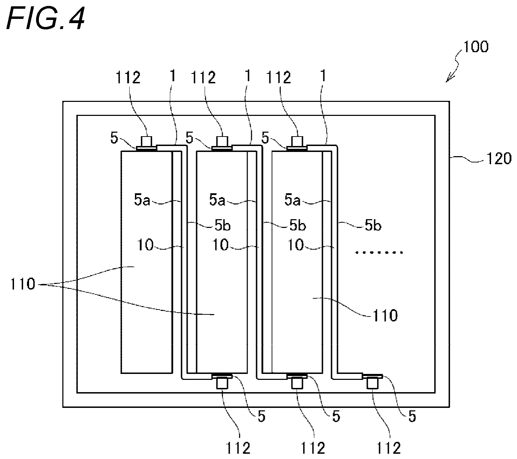

Next, a power storage device according to the present embodiment will be described with reference to Fig. 4.

### [Power Storage Device]

As shown in Fig. 4, a power storage device 100 includes a plurality of battery cells 110 housed in a battery case 120. The adjacent battery cell 110 and battery cell 110 are connected to each other by the bus bar 1.

In the bus bar 1, the bus bar body 5 is covered with the insulating film 10. The insulating film 10 has, for example, a region (not shown) having the maximum film thickness T1max and a region (not shown) having the minimum film thickness T1min on the first main surface 25a, and a region (not shown) having the maximum film thickness T2max and a region (not shown) having the minimum film thickness T2min on the second main surface 25b. Since the positions of T1max, T1min, T2max, and T2min vary depending on the design of the battery cell 110 and a relative position between the battery cell 110 and the bus bar 1, although not shown in Fig. 4, it is preferable that the bus bar 1 is disposed such that the first region (the region having the maximum film thickness T1max) in the first main surface 25a of the bus bar 1 faces the battery cell 110. In addition, it is more preferable that the bus bar 1 is disposed such that the third region (the region having the maximum film thickness T2max) in the second main surface 25b of the bus bar 1 faces the battery cell 110.

In the power storage device 100 configured in this manner, since the film thickness of the insulating film in a necessary region is formed to be large and the film thickness of the insulating film in an unnecessary region is formed to be small, it is possible to sufficiently ensure the insulation property in the necessary region and to protect the bus bar 1 even when a certain battery cell 110 experiences thermal runaway.

Therefore, in the power storage device according to the present embodiment, since the plurality of battery cells 110 or battery modules (not shown) are connected to each other by the bus bar 1, high safety is exhibited even in an abnormal state.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-030457) filed on February 28, 2023, and the contents thereof are incorporated herein by reference.

### REFERENCE SIGNS LIST

1, 1a, 1b, 1c bus bar
5, 25 bus bar body
6a, 6b connection hole
10, 26 insulating film
21 first region
22 second region
23 third region
24 fourth region
25a first main surface
25b second main surface
100 power storage device
110 battery cell
111 electrode
120 battery case

## Claims

1. A bus bar for use in a power storage device including a battery cell, the bus bar comprising:
a bus bar body containing a conductive material and having a plurality of main surfaces orthogonal to a plate-thickness direction; and
an insulating film covering the bus bar body, wherein
a predetermined first main surface among the plurality of main surfaces of the bus bar body has a first region in which the insulating film formed on the first main surface has a maximum film thickness T1max and a second region in which the insulating film formed on the first main surface has a minimum film thickness T1min, and
a ratio (T1max/T1min) of the maximum film thickness T1max to the minimum film thickness T1min is larger than 1.0 and 7.0 or less.

2. The bus bar according to claim 1, wherein the minimum film thickness T1min is 300 µm or more.

3. The bus bar according to claim 1, wherein the maximum film thickness T1max is larger than 300 µm and 2,100 µm or less.

4. The bus bar according to claim 1, wherein
a second main surface on a back surface side of the first main surface has a third region in which the insulating film formed on the second main surface has a maximum film thickness T2max and a fourth region in which the insulating film formed on the second main surface has a minimum film thickness T2min, and
a ratio (T2max/T2min) of the maximum film thickness T2max to the minimum film thickness T2min is larger than 1.0 and 7.0 or less.

5. The bus bar according to claim 1, wherein
a second main surface on a back surface side of the first main surface has a third region in which the insulating film formed on the second main surface has a maximum film thickness T2max, and
a ratio (T1max/T2max) of the maximum film thickness T1max to the maximum film thickness T2max is larger than 1.0 and 7.0 or less.

6. The bus bar according to claim 1, wherein the insulating film contains a filler.

7. The bus bar according to claim 6, wherein the filler includes an inorganic compound.

8. The bus bar according to claim 7, wherein the inorganic compound includes a silicate compound.

9. The bus bar according to claim 8, wherein the silicate compound is at least one kind selected from a glass-based material, mica, kaolin, talc, clay, pyrophyllite, montmorillonite, bentonite, wollastonite, xonotlite, zeolite, diatomaceous earth, and halloysite.

10. The bus bar according to claim 9, wherein the glass-based material is at least one kind selected from a flaky glass, a glass particle, a glass fiber, and a glass bead.

11. The bus bar according to claim 9, wherein the silicate compound includes at least one of a glass-based material and mica, and the glass-based material is a flaky glass.

12. The bus bar according to claim 6, wherein a content of the filler with respect to all components in the insulating film is 3 vol% to 70 vol%.

13. The bus bar according to claim 6, wherein the insulating film contains a silicone-based material.

14. The bus bar according to claim 13, wherein the insulating film contains a silicone resin and a thixotropic agent.

15. A method for producing the bus bar according to any one of claims 1 to 4 and 6 to 14, the method comprising:
a dipping step of immersing the bus bar body in an insulating coating material and then pulling up the bus bar body; and
a drying step of drying the insulating coating material applied to a surface of the bus bar body to form the insulating film, wherein
the dipping step includes a step of immersing the bus bar body in the insulating coating material and then pulling up the bus bar body from the insulating coating material in a state where the bus bar body is held such that a position of the first region is disposed below a position of the second region in a substantially vertical direction.

16. A method for producing the bus bar according to claim 4, the method comprising:
a first dipping step of immersing the bus bar body in an insulating coating material and then pulling up the bus bar body;
a first drying step of drying the insulating coating material applied to a surface of the bus bar body to form the insulating film;
a second dipping step of immersing the bus bar body on which the insulating film is formed after the first drying step in an insulating coating material again and then pulling up the bus bar body; and
a second drying step of drying the insulating coating material applied to the surface of the bus bar body after the second dipping step to form the insulating film, wherein
the first dipping step includes a step of immersing the bus bar body in the insulating coating material and then pulling up the bus bar body from the insulating coating material in a state where the bus bar body is held such that the first main surface faces downward in a substantially vertical direction, and
the second dipping step includes a step of immersing the bus bar body on which the insulating film is formed after the first drying step in the insulating coating material again, and then pulling up the bus bar body from the insulating coating material in a state where the bus bar body is held such that the second main surface faces downward in the substantially vertical direction.

17. A method for producing the bus bar according to claim 5, the method comprising:
a dipping step of immersing the bus bar body in an insulating coating material and then pulling up the bus bar body; and
a drying step of drying the insulating coating material applied to a surface of the bus bar body to form the insulating film, wherein
the dipping step includes a step of immersing the bus bar body in the insulating coating material and then pulling up the bus bar body from the insulating coating material in a state where the bus bar body is held such that the first main surface faces downward in a substantially vertical direction.

18. A power storage device comprising:
a plurality of battery cells or battery modules connected to each other by the bus bar according to any one of claims 1 to 14.

19. The power storage device according to claim 18, wherein the bus bar is disposed such that the first region in the first main surface faces the battery cells or the battery modules.

20. A power storage device comprising:
a plurality of battery cells or battery modules connected to each other by the bus bar according to claim 4, wherein
the bus bar is disposed such that the first region in the first main surface and the third region in the second main surface face the plurality of battery cells or battery modules.
